(19)

Europäisches
Patentamt

European
Patent Office

Office européen
des brevets

(11) **EP 2 153 410 B1**

(12) **EUROPEAN PATENT SPECIFICATION**

(45) Date of publication and mention
of the grant of the patent:
**16.11.2016 Bulletin 2016/46**

(51) Int Cl.:
***G06T 7/00*** *(2006.01)*

(21) Application number: **07777300.0**

(22) Date of filing: **29.05.2007**

(86) International application number:
**PCT/US2007/012637**

(87) International publication number:
**WO 2008/147355 (04.12.2008 Gazette 2008/49)**

(54) **3D ASSEMBLY VERIFICATION FROM 2D IMAGES**

3D-ZUSAMMENSTELLUNGSVERIFIKATION AUS 2D-BILDERN

VÉRIFICATION D'UN MONTAGE EN 3D À PARTIR D'IMAGES EN 2D

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**17.02.2010 Bulletin 2010/07**

(73) Proprietors:
• **Cognex Technology and Investment Corporation
Mountain View, CA 94043 (US)**
• **Michael, David J.
Wayland, MA 01778 (US)**

(72) Inventors:
• **MICHAEL, David, J.
Wayland, MA 01778 (US)**
• **WALLACK, Aaron, S.
Natik, MA 01760 (US)**

(74) Representative: **advotec.
Patent- und Rechtsanwälte
Widenmayerstrasse 4
80538 München (DE)**

(56) References cited:
• **KHALID W KHAWAJA ET AL: "A Multiscale
Assembly Inspection Algorithm" IEEE
ROBOTICS & AUTOMATION MAGAZINE, IEEE
SERVICE CENTER, PISCATAWAY, NJ, US, vol. 3,
no. 2, 1 June 1996 (1996-06-01), pages 15-22,
XP011089676 ISSN: 1070-9932**
• **GUEHRING J: "Reliable 3D Surface Acquisition,
Registration and Validation Using Statistical
Error Models" 3-D DIGITAL IMAGING AND
MODELING, 2001. PROCEEDINGS. THIRD
INTERNATION AL CONFERENCE ON 28 MAY - 1
JUNE 2001, PISCATAWAY, NJ, USA,IEEE, 28 May
2001 (2001-05-28), page 224, XP002346323 ISBN:
978-0-7695-0984-6**
• **QIFENG YU ET AL: "Accurate measurement of 3D
coordinate of an object with subpixel technique"
SYSTEMS, MAN AND CYBERNETICS, 1996., IEEE
INTERNATIONAL CONFERENCE ON BEIJING,
CHINA 14-17 OCT. 1996, NEW YORK, NY,
USA,IEEE, US, vol. 1, 14 October 1996
(1996-10-14), pages 484-486, XP010206676 ISBN:
978-0-7803-3280-5**

**Description**

Field of the Invention

This invention relates to machine vision for product quality control, and particularly to using machine vision to verify the correct assembly of product parts.

Background of the Invention

Many products consist of a plurality of parts, and the parts must be assembled correctly to provide a working product. Parts are typically assembled by placing subcomponents inside or onto a larger assembly. During and after the process of assembling a part, it is often useful to verify that all of the parts are properly placed. The majority of assembly operations are "vertical assembly" operations, wherein parts are inserted from above, moving down onto the part. Thus, subcomponent positions need to be verified in a least three dimensions, e.g., x, y, and z. One benefit of assembly verification early in an assembly process is to reduce waste and scrap by identifying quality issues as soon as possible in the process.

Most assemblies are verified manually, when they are verified at all. Sometimes, verification is inherently performed as part of a subsequent operation if, by the nature of the subsequent operation, the subsequent operation cannot be performed due to incorrect performance of a previous operation., One consequence of this form of part verification is wasted material, or wasted time to rework the part.

It is known how to perform assembly verification automatically using mechanical 3D single-point measurement systems (e.g., touch sensors), single-point distance measurement sensors (e.g., laser-based sensors), or 3D measurement systems using structured illumination (e.g., depth from defocus sensors).

Coordinate measurement machines are mechanical 3D single-point measurement systems. The machine uses three orthogonal axes and a spherical touch sensor. The touch sensor is moved until it touches a part, and the three coordinate axis positions are recorded. The touch sensor touches the part very lightly, so that the part does not move. Thereby, a user can determine multiple 3D positions sampled from a single part.

However, single-point sensors have the drawback that they can only measure one position at a time, which results in either reduced throughput, or the need to deploy multiple single-point sensors simultaneously. Either way, the single-point sensors must be manually repositioned whenever the part to be verified changes, which is burdensome and inefficient.

Laser-based sensors are another method for measuring multiple 3D positions from a single part. Laser-based sensors are non-contact in that they do not touch the part (which might cause the part to move or deform). Laser-based sensors are distance sensors which measure the distance from the laser to the part.

Since a laser-based sensor can only measure one dimension (distance), the laser is usually moved along two axes, or the beam is directed using actuated mirrors, in order to scan a part, which can be time-consuming.

Structured Illumination sensors use structured illumination and 2D optical sensor arrays to measure a 2D array of distances. One example of structured illumination involves projecting a stripe of light onto a part. The light stripe is viewed from a different angle, and the position of each dot of the stripe differs from the stripes nominal position according to the height of the part at that dot's position. One drawback of structured illumination-based 3D systems is that structured-illumination methods require a relatively long time to "scan" a part to be verified.

The paper "A Multiscale Assembly Inspection Algorithm" in IEEE Robotics & Automation Magazine June 1996, discloses an accurate and efficient method for the inspection of finished assemblies.

The algorithm is trained on synthetic images generated using the CAD model of the different components of the assembly. Once trained on synthetic images, the algorithm can detect assembly errors by examining real images of the assembled product.

J. Gühring discloses in his article "Reliable 3D Surface Acquisition, Registration and Validation using Statistical Error Models" in 3D digital imaging and modelling proceedings, 2001, a complete data acquisition and processing chain for the reliable inspection of industrial parts considering anisotropic noise. Data acquisition is performed with a stripe projection system that was modelled and calibrated using photogrammetric techniques. Covariance matrices are attached individually to points during 3D coordinate computation. Different datasets are registered using a new multi-view registration technique. In the validation step, the registered datasets are compared with the CAD model to verify that the measured part meets its specification.

Qifeng Yu discloses in his article "Accurate Measurement of 3D Coordinate of an Object with Subpixel Technique" in Systems, 1996, an accurate measurement of 3D position of an object, which is very important for industrial quality control, robot vision and 3D movement analysis. He presents an accurate 3D measurement method by a stereo camera system with subpixel technique of digital image processing. With the method, the stereo camera system is accurately calibrated and rectified with a rectangular grid.

The specified object masks are extracted accurately and automatically by pattern recognition method. Finally, the object masks on each camera image are matched automatically and the 3D position of the object is determined by the photogrammetric principle.

Summary of the Invention

In the method for assembly verification of the invention, measurement of the x,y,z (3D) position of each subcomponent is performed using triangulation from at least two, but often three cameras which acquire, respectively, two, or three images simultaneously. An operator trains model patterns for each camera that correspond to the same subcomponent of the part to be verified. At run time, the patterns are substantially registered in views from the three cameras so as to provide measured 3D position information regarding the subcomponents. Then, measured 3D positions are compared with their expected nominal 3D positions, and differences in 3D position are checked against specified tolerances.

The invention simplifies the task of assembly verification in that it requires only multiple cameras to be fixed above an assembly line. Training requires merely that an operator acquire an image of a "correctly assembled part", and then select patterns that correspond to each subcomponent to be verified. At train time, the operator also selects positional tolerances for each subcomponent. After only minor operator activity, the invention can then perform assembly verification automatically.

The invention can perform fixtureless assembly verification, wherein overall part pose can be accommodated. Since the part itself is not fixtured, it can be presented to the machine vision system with arbitrary 3D position, and arbitrary pitch, yaw, and roll orientation. The invention can nevertheless find the run-time 3D positions of all the sub-assemblies, and using those run-time 3D positions, determine whether there is an overall part pose that can transform those run-time 3D positions to match the model.

The invention can measure multiple points simultaneously, resulting in faster throughput, and simpler equipment. Further, the invention can be rapidly reconfigured when the part to be verified changes. Images of the parts assembly to be verified can be taken rapidly, since the cameras of the invention acquire images rapidly and simultaneously, enabling application of stroboscopic illumination of parts on a rapidly moving assembly line.

To simplify train-time, a two-camera or three-camera system can be manufactured and sold which is pre-calibrated at the factory. Thus, this stereo/trinocular pre-calibrated camera system can be rapidly positioned at train-time, and at run-time, ensuring accurate and repeatable multi-camera calibration.

Brief Description of the Drawing

The invention will be more fully understood by reference to the detailed description, in conjunction with the following figures, wherein:

Fig. 1 is a diagram showing three cameras, each including three subcomponents in their respective fields of view;
Fig. 2 is a screen shot illustrating the user interface of the invention, and train-time selection of a training window, and an origin of a second subassembly;
Fig. 3 is a screen shot illustrating the user interface of the invention, and train-time measurement of a model 3D position of the second subassembly;
Fig. 4 is a screen shot illustrating the user interface of the invention, and train-time measurement of a 3D position of the fourth subassembly, also showing the 3D positions of the other subassemblies;
Fig. 5 is a screen shot illustrating the user interface of the invention, showing run-time results, including three overall views of the assembly, overall pose, overall orientation, overall RMS error, Self Consistency Error, and the Inspection Result;
Fig. 6 is a flow chart illustrating a train time phase of the invention;

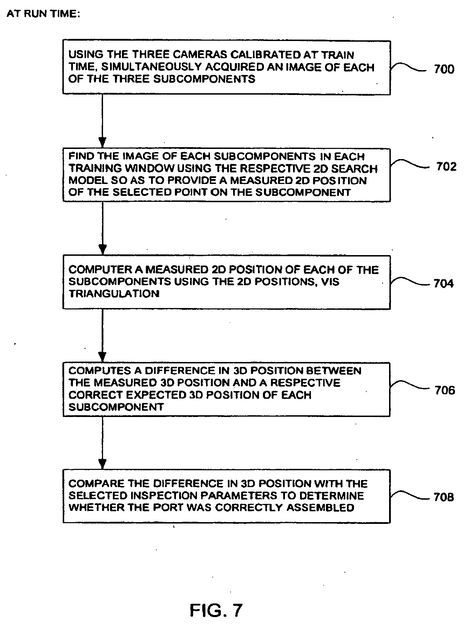

Fig. 7 is a flow chart illustrating a run time phase of the invention;
Fig. 8 is a flow chart illustrating an aspect of a run time phase of the invention involving three 3D points;
Fig. 9 is a flow chart illustrating an aspect of a run time phase of the invention involving consistency checking;
Fig. 10 is a flow chart illustrating a general train time phase of the invention; and
Fig. 11 is a flow chart illustrating a general run time phase of the invention;

Detailed Description

In the following detailed description of an illustrative embodiment, reference is made to the accompanying drawings which form a part hereof, and in which are shown by way of illustration specific embodiments of the invention. It is to be understood that other embodiments may be utilized, and structural changes may be made, without departing from the scope of the present invention.

The method and apparatus of the invention essentially compares the measured (also called "run -time") 3D positions of subcomponents of a part (an "assembly" of subcomponents) with their expected (also called "model" or "correct") 3D positions. If the measured 3D positions are close enough (within a tolerance) to the expected 3D positions, the assembly of subcomponents is deemed to be "verified". In some cases, an assembly can be rejected if only one of the subcomponents is not properly placed with respect to a substrate (which also can be called a subcomponent) upon which the subcomponent is placed during an assembly process. Many assembly processes involve vertical placement of a subcomponent, downwardly inserting a subcomponent into a connector socket on a printed circuit board substrate. For example, if a subcomponent to be inserted into a connector is only partially inserted, it will be measured as being at an incorrect height (z) with respect to the substrate, or with respect to other correctly inserted subcomponents of verified 3D position.

The invention can compare both absolute 3D positions (x, y, z) within the physical reference frame of a plurality of calibrated cameras, and relative 3D positions ($\Delta x$, $\Delta y$, $\Delta z$) among the assembly of subcomponents of a part. The invention can verify an assembly regardless of it's location or orientation, as long as at least two subcomponents are within the field of view of at least two of the cameras. Thus, "fixtureless" assembly verification can be performed using the invention. Alternatively, if the part to be verified is fixtured, the invention can be used to verify the correct relative positions of the subcomponents relative to the fixture.

In an illustrative embodiment, the invention verifies an assembly, regardless of it's location or orientation, using three subcomponents within the field of view of each of three cameras.

If three subcomponents are in the field of view of each of at least two cameras, then the three subcomponents define a plane, and all three rotational degrees of freedom (pitch, yaw, roll) can be verified as well as x, y, and z position.

A 3D position (x, y, z) is expressed as the horizontal position (x), front-back position (y), and height (z) in the physical reference frame of the calibrated cameras. According to the present invention, a 3D position of a subcomponent is the 3D position of a point on the subcomponent, the point being selected by a user, as will be explained below with reference to the figures.

If the selected point is visible within the field of view of at least two cameras, triangulation can be used to determine 3D position, as will be explained below in further detail. If the selected point is visible within the field of view of three or more mutually calibrated cameras, then the accuracy of the triangulation is enhanced. In one embodiment, mutually calibrated cameras are calibrated using the same calibration plate, as described in "Methods and Apparatus for Practical 3D Vision System" (Serial No. 11/246,024) by Aaron Wallack and David Michael, and assigned to Cognex Corporation, Natick MA, herein incorporated by reference.

The accuracy of the triangulation position information can be evaluated and expressed as a parameter called Triangulation RMS (root mean squared) error. The Triangulation RMS Error can be compared with a "Tolerance" parameter to ensure that substantially the same point on a component is selected in each of three fields of view, as will be explained and illustrated below.

Alternatively, the error can be expressed as a sum of absolute differences, where the absolute values of differences are added up to provide a measure of the accuracy of the triangulation position. If the sum of absolute differences falls below a threshold, then the accuracy is acceptable. Other measures may that occur to one skilled in the art may be used without departing from the scope of the invention.

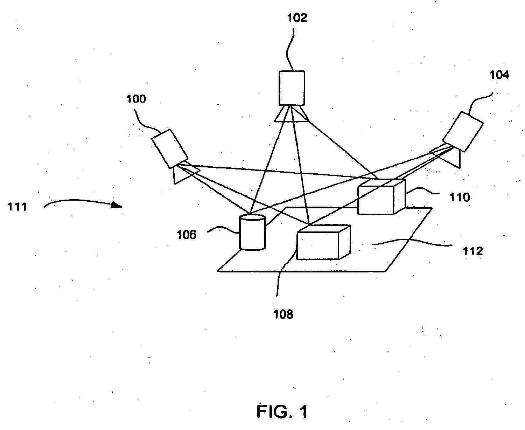

With reference to Fig. 1, three cameras 100, 102, 104 of a machine vision system are shown, each including three subcomponents 106, 108, 110 of a part 111 in their respective fields of view. The part 111 includes a substrate 112 (also a subcomponent of the assembly), upon which the three subcomponents 106, 108, 110 are placed such that at least two of the subcomponents to be verified are within the field of view of at least two of the cameras. Note that the substrate 112 is not needed to practice the invention, since the three subcomponents 106, 108, 110 can be connected directly to each other to form the part 111.

At least two cameras are needed so as to perform triangulation to obtain a 3D point in physical space. A clear and compete explanation for this technique is presented in "Methods and Apparatus for Practical 3D Vision System" (Serial No. 11/246,024) by Aaron Wallack and David Michael, and assigned to Cognex Corporation, Natick MA, herein incorporated by reference. Camera calibration is also described therein that is used to map pixel data from the three cameras 100, 102, 104 to points in the 3D space that includes the part 111 and the three subcomponents 106, 108, 110. The invention is not limited to the triangulation and calibration methods described therein, and other such triangulation methods, calibration methods, or other method methods to achieve the same desired effect as are known in the art can be used instead.

Although two cameras can be used to determine a 3D point, three cameras are shown in Fig. 1 in an illustrative embodiment. Although three subcomponents are shown in the illustrative embodiment, in some applications it is useful to include at least four subcomponents in the field of view of each camera so that three subcomponents can be selected to perform an internal consistency check, thereby verifying the position of the fourth subcomponent relative to the other three subcomponents. This technique will be discussed further below.

Also, the more cameras that are used, the more robustness, and the more accuracy can be achieved. Further, with more cameras, there's more likelihood of seeing each part in at least two cameras, or even better, in three cameras.

Further, there's more likelihood of seeing at least one subcomponent if more subcomponents are used, but it is less likely that all subcomponents will be "seen" if more subcomponents are used.

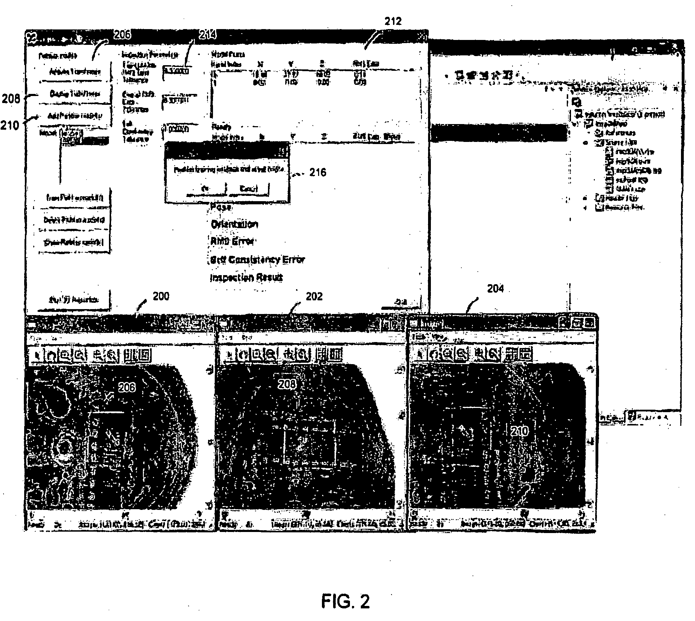

With reference to Fig. 2, a user interface of a machine vision system incorporating the invention is presented. At train time, three camera view windows 200, 202, 204 are shown after a user clicks on "Acquire Train Image" 206, and "Display Train Image" 208. Each camera view window shows at least a portion of the field of view of one of the three cameras 100, 102, 104 of Fig. 1. Each camera 100, 102, 104 shows a different perspective of the same subcomponent. For example, Fig. 2 shows three views of a chip carrier that is inserted into a PCB, the chip carrier having a large "Z" on top.

Next, the user clicks on the "Add PatMax Models" button 210 to begin the creation of a new 3D search model. To do so, a 2D search model for each view window must be created. The 2D model is a selected subwindow of an acquired image in the respective view window. The 3D model consists of the collection of 2D models, the corresponding coincident origins, and the 3D position of those coincident origins. A 3D search model 0 of a point on the subcomponent has already been created, having triangulation RMS error 0.11, as shown in the "Model Points" window 212. The triangulation RMS error 0.11 is within the user-selected triangulation RMS error tolerance 214, where the error tolerance is 0.30..

Model 1 has not yet been created in Fig. 2, so a prompt 216 appears, stating "Position training windows and select origins". In response, the user defines a "training window" (shown as a thin white rectangle) 206, 208, 210 in the field of view of each camera 100, 102, 104, and an "origin" centered on a point that can be found in each window. There is a white cross-hair indicating the selected "origin" within each training window 206, 208, 210. The image within the training window and the origin are used to train a search model, such as a model for normalized correlation search, or for rotation-invariant and scale-invariant search (such as PatMax™, made by Cognex Corporation).

The user has selected the bottom left corner of the "Z" to be the "origin" (shown as a white cross-hair) of the subcomponent, and has selected that point on the Z in each view by pointing to it and then clicking. Thus the same point on the subcomponent is seen from three different viewing perspectives.

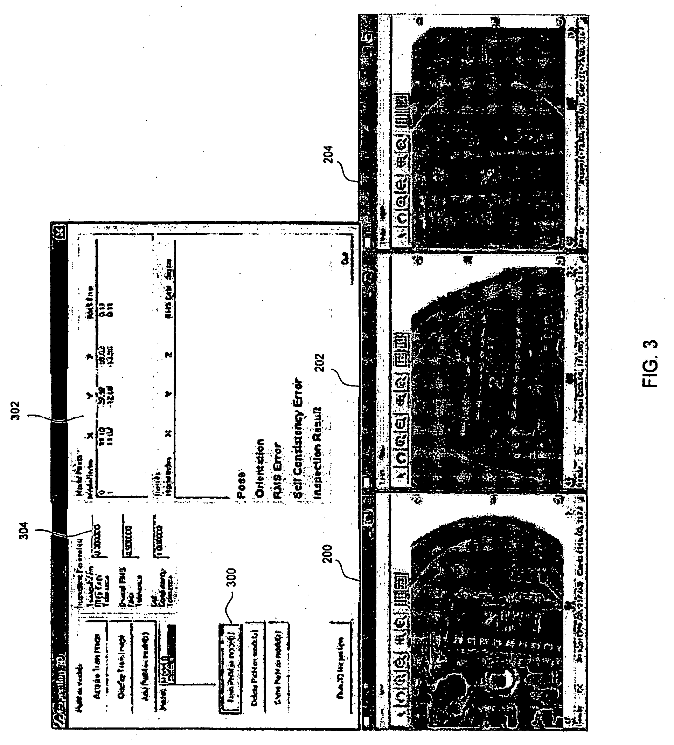

With reference to Fig. 3, the user clicks the "Train PatMax Model(s)" button 300. In response, three 2D search models are created, and then used to find the selected point in each of the images 200, 202, 204. The search results from the 2D search in each window are converted using triangulation into a 3D point (the physical 3D position of the selected point on the "Z"), having x, y, z coordinates (11.02, -12.68, -13.96), as shown in the Model Points window 302. Note that the Triangulation RMS Error of 0.11 is still less than the user-defined Triangulation RMS Error Tolerance 304 of 0.30.

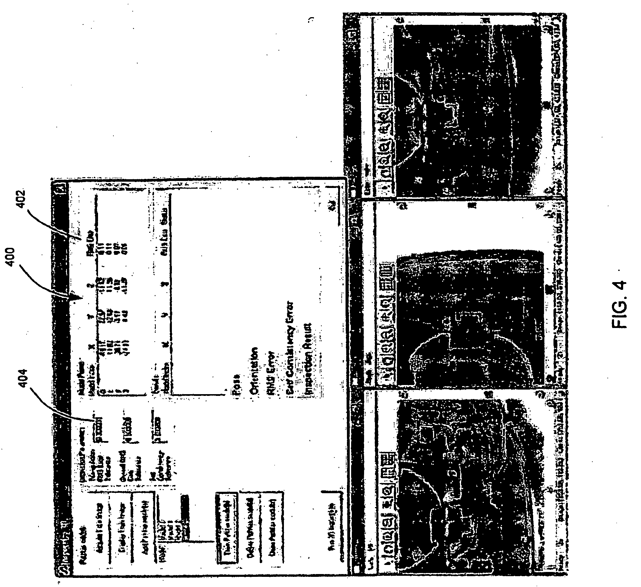

Referring to Fig. 4, four 3D models (0, 1, 2, 3) of four different actual points on respective subassemblies have been trained. Each 3D model has a 3D location as set forth in the Model Points Window 400. Each Triangulation RMS Error 402 should be less than the Triangulation RMS Error Tolerance 404, because even though the Triangulation RMS Error 402 is measured at runtime, and the Triangulation RMS Error Tolerance 404 will be used at runtime, the training-time Triangulation RMS Error 402 usually provides a lower-bound on the Triangulation RMS Error Tolerance 404. The Triangulation RMS Error Tolerance 404 may be used at training time by the operator so as to provide feedback on how consistently the operator has placed the cross-hair upon the same point on a subassembly in each of the three fields of view of the respective cameras. If the Triangulation RMS Error exceeds the Tolerance 404, then the cross-hair may be placed again in an effort to reduce the Triangulation RMS Error until it's below the Tolerance 404. Alternatively, the application could have a separate Training Time Triangulation RMS Error Tolerance which is used to determine whether the operator must reselect the points.

In summary, at train time, the user has selected a single point on each one of the subassemblies as part of a method of the invention wherein a 3D search model of each subcomponent is created. Each 3D search model actually is a set of 2D search models that can be used to find a 3D point in physical space by searching image windows from multiple cameras that all view the same part, and using the found 2D positions and a triangulation technique (cited above) to compute the correct (model) 3D positions of each of the subcomponents.

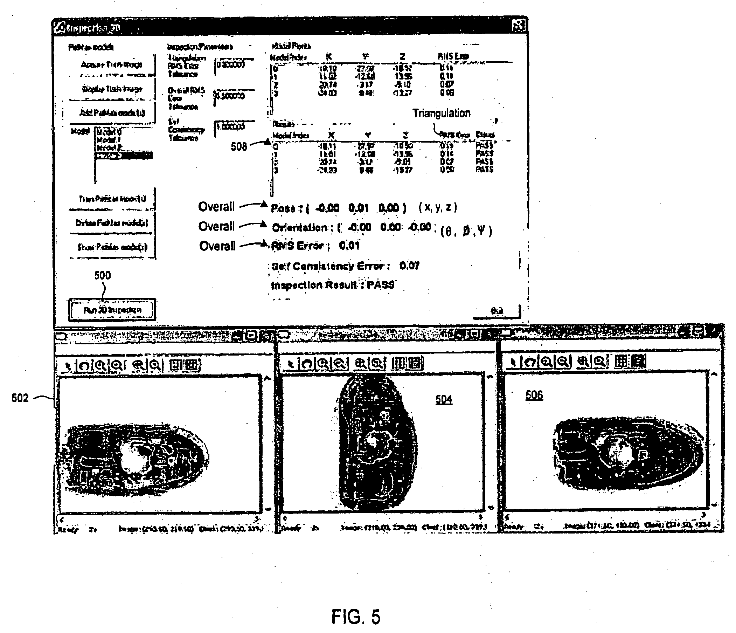

At run time, referring to Fig. 5, the 3D models from Fig. 4 are used to find the subassemblies using views acquired by the set of calibrated cameras from the previous Figs. 1-4. A user (or operator) simply clicks on the "Run 3D Inspection" button 500, and each of the three images in the windows 502, 504, 506 are searched using the appropriate 2D search model from the 3D model corresponding to each of the respective subassemblies. Even though there are four subassemblies being verified in this example, only one set of three images will be acquired (because each of the four subassemblies is visible to all three cameras. The same images (in each respective window 502, 504, 506) will be searched four times by four respective 2D search models to provide four triangulated measured 3D positions. Each triangulated measured 3D position will be the result of a triangulation computation using the three 2D found (measured) locations.

Each triangulated 3D position is listed in the "Results" window 508, showing the x, y, z component, the Triangulation RMS Error, and the PASS/FAIL status of the Triangulation RMS Error with respect to the Triangulation RMS Tolerance.

Also shown below the "Results" window 508 is the Overall Pose (x,y,z position) of the entire assembly that is computed from the measured subcomponent results. Below that is the Overall Orientation stated in three degrees of rotational freedom, e.g., pitch, yaw, and roll, which can be computed from the measured subcomponent results. Further below is the Overall RMS Error, which compares the four expected model 3D positions of the subcomponents with the four measured model 3D positions. Also presented is a "Self-Consistency Error", which is a measure of how each subassembly is displaced from an expected position as determined by the measured positions of three other subassemblies. Finally, the Overall Inspection Result is presented, being calculated by comparing one or more of the measured and computed results with a Tolerance value, as set by an operator or user in accordance with the requirements of a particular application. For example, if all of the individual Triangulation RMS Tolerances are met, and the Overall RMS Tolerance is met, then the assembly would be accorded a PASS.

The foregoing discussion of a GUI pertains to specific embodiments and it is contemplated that significant modifications can be implement to achieve similar results. The GUI could make use of a personal digital assistant or a human machine interface having buttons or indicators, for example. It will be apparent that during run time and train time the user interface can display more or less measurements and/or images, and items can be presented numerically or graphically, including the use of color for pass or fail, for example.

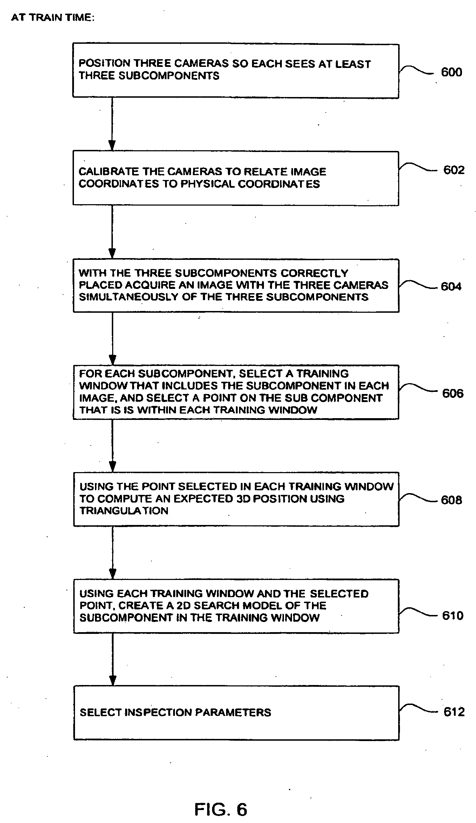

Other methods for creating models and finding 3D points can be used, such as, for example, shining a light on the part, and then registering that light (to find the coincident origin), and then making the model a circle of fixed radius (in each image) around the origin point. Referring to Fig. 6, a method of the invention for verification of correct assembly of a part that has subcomponents will be further discussed. The method includes a train time phase, and a run time phase. At train time, at least two cameras are positioned such that a field of view of at least one of the cameras includes at least one subcomponent of the part 600. This is illustrated in Fig. 1 as three cameras, where three cameras provides more accuracy than two cameras.

Next, each of the at least two cameras are calibrated at least so as to relate image coordinates to physical coordinates 602. This technique is described in "Methods and Apparatus for Practical 3D Vision System" (Express Mail Label No. EV 324 850 053 US) by Aaron Wallack and David Michael, and assigned to Cognex Corporation, Natick MA, herein incorporated by reference. Any technique known in the art that relates image coordinates of multiple cameras to a shared physical space would be effective. Calibrating each of the at least two cameras can include determining a 3D position of a camera origin of each of the at least two cameras. Then, triangulation can include finding a 2D position of the origin of the subcomponent in the field of view of each camera, and the 3D position of the camera origin of each camera.

To avoid the need for a user to calibrate the cameras, the user can instead obtain a pre-calibrated two-camera or three-camera system. In this case, a user starts at step 600 using the pre-calibrated stereo/trinocular camera system, thereby simplifying training, because the user simply positions the pre-calibrated camera system having three rigidly attached cameras in step 600, and would not need to perform the calibration step 602. Then, for each of at least two subcomponents, each of the at least two cameras are used to simultaneously acquire an image of a subcomponent in a correctly assembled position 604. Note that is desirable for the images to be acquired simultaneously, but not required. If two subcomponents are used, then a span (distance) between the two subcomponents can be measured, thereby providing a "span verification metric". The span verification metric at runtime should be within a range based on the span verification metric at train time. Many pairs of subcomponents can be used, each pair providing a span verification metric, and the sum of the span verification metrics providing an accumulated span verification metric which can be compared with an accumulated span verification acceptance threshold at run-time. Other metrics or measures may occur to those skilled in art, and are within the scope of the invention.

If three subcomponents are used, then a rigid transform pose can be found that minimizes the sum squared error between the pose-mapped 3D model points and the found 3D runtime points, as will be explained further below.

Next, for each of at least two subcomponents, using each of the at least two cameras, a training window is selected by a user that includes the subcomponent. Also, a same point is selected on the subcomponent in each training window, the same point serving as an origin associated with the subcomponent 606. This step is also shown in Fig. 2.

Then, for each of the at least two subcomponents, an expected 3D position of the subcomponent is computed by triangulation 608. This is explained in "Methods and Apparatus for Practical 3D Vision System" (Serial No. 11/246,024) by Aaron Wallack and David Michael, and assigned to Cognex Corporation, Natick MA, herein incorporated by reference. Also, triangulation is explained in many other references in the prior art.

Any method for finding 3D position from multiple image views can be used to practice the invention. For example, determining 3D position need not be found using triangulation based on a pattern's origin. Instead, 3D position can be determined by registering linear features (in the images), and then intersecting these linear features to provide a final 3D position. The important thing is that the method generates accurate 3D positions for use in assembly verification. Any method that provides accuracy of the 3D positional measurement within allowable tolerance of each subcomponent is useful.

Next, for each of at least two subcomponents, the training window and the origin corresponding thereto are used to create a 2D search model of the subcomponent in the training window 610. The training routines of Normalized correlation search can be used, or the training routines of a rotation and scale invariant search, such as PatMax® can be used. Alternatively, models can be supplied, such as models derived from CAD data. Further, coarse models can be provided, that can then be refined further using the invention. Other variations to obtain a model for practice in the invention may occur to those skilled in the art. Then, the user selects inspection parameters, such as the Triangulation RMS Error Tolerance, the Overall RMS Error Tolerance, and the Self Consistency Tolerance, each of which can be set according to the particular application and situation 612. The Triangulation RMS Error Tolerance is a threshold on a measure of how accurately the user selects the same point in each field of view of each camera. The Overall RMS Error Tolerance is a threshold on a measure of how much the measured 3D points vary in the aggregate from the expected 3D points on the subassemblies. The Self Consistency Tolerance is a threshold on a measure of the aggregate Self Consistency Error, which will be discussed further below. Also, selecting inspection parameters includes selecting distance tolerances defining an extent to which a measured 3D position can acceptably differ from a correct 3D position.

So, selecting a same point on the subcomponent in each training window includes: providing information regarding a measure of correspondence of the multiple points selected to a unique 3D point, so as to aid an operator in selecting the same point on the subcomponent in each training window. The measure of correspondence is an RMS error.

At run time, for each of at least two subcomponents of an assembled part to be verified, each of the at least two cameras are used to simultaneously acquire an image of a subcomponent in a candidate assembled position 700, as shown in Fig. 5. Note that is desirable for the images to be acquired simultaneously, but not required. Use of three cameras will provide more accurate triangulation. If at least three subcomponents are imaged, then a rigid transform pose can be found that minimizes the sum squared error between the pose-mapped 3D model points and the found 3D runtime points, as will be explained further below. If more than three components are imaged, then more than one subgroup of three images can be used to find at least one rigid transform pose that minimizes the sum squared error. Note that the cameras and their lenses remain in the exactly the same positions where they were calibrated during the training step. Other measures to be minimized, or other measures, may be used without departing from the scope of the invention.

Then, for each of the at least two subcomponents, the image of the subcomponent in the candidate assembled position is found using the 2D search model of the subcomponent so as to provide a measured 2D position of the origin of the subcomponent 702. Again, normalized correlation search, or rotation and scale invariant search, such as PatMax® can be used.

Next, for each of the at least two subcomponents, a measured 3D position of the subcomponent is computed by triangulation 704. Typically, the measured 2D position of the origin of the subcomponent in each camera field of view, and the 3D position of the camera origin of each camera are used to find the measured 3D position of each subcomponent. Also, computing a measured 3D position of the subcomponent by triangulation can include computing an error measure; and comparing the error measure with the inspection parameters so as to contribute to determining whether the part was assembled correctly.

Then, for each of the at least two subcomponents, a difference in 3D position is computed between the measured 3D position of the subcomponent and the respective correct 3D position of the subcomponent 706.

Next, the difference in 3D position is compared with the inspection parameters so as to contribute to determining whether the part was assembled correctly 708. In some embodiments, a single component of the difference in 3D position is compared with single component inspection parameters so as to contribute to determining whether the part was assembled correctly. In some of these embodiments, the single component is z-position (height).

In some situations, run time will also include computing an overall pose of the part using a plurality of 3D positions of respective subcomponents. Typically, computing an overall pose of the part includes: computing an overall pose error; and finding a pose which minimizes the overall pose error. Also included can be comparing the overall pose error with the inspection parameters so as to contribute to determining whether the part was assembled correctly.

Here is some more information about how the object's pose is estimated from 3 or more pairs of corresponding 3D points. Each pair consists of a 3D measured runtime point corresponding to a 3D model point. Given a set of 3D runtime found points which correspond in a one-to-one fashion to a set of 3D expected points, there is a rigid transform pose which minimizes the sum squared error between the pose-mapped 3D expected points and the measured 3D runtime points. The rigid transform pose consists only of translations and rotations. There is a well-known method to compute least-squares rigid transform pose between two point sets.

Mathematically speaking, given a set of training 3D points D, and a set of runtime 3D points M, we want to find the rigid transformation (denoted by 3x3 rotation matrix R and 3x1 translation matrix T) such that:

$$M = R D + T,$$

Or for every point

$$m_i = R \, d_i + T$$

We find the optimal estimate for R and T by minimizing

Sum $(m_i - R \, d_i + T)^2$, or expressed more formally:

$$\Sigma^2 = \sum_{i=1}^{N} \| m_i - (Rd_i + T) \|^2$$

First we compute the means of $m_i$ and $d_i$,

$$mean_m = Sum \; m_i \, / \, N$$

$$mean_d = Sum \; d_i \, / \, N$$

Construct new sets M' and D' which correspond to $m_i$ - $mean_m$ and $d_i$-$mean_d$ We use matrix analysis and quaternions to solve for the optimal rigid rotation matrix R.
Determine the covariance matrix C which equals Sum m'i transpose(d'i),

Create the matrix A which equals C - transpose(C)
Build from the matrix A, the column vector Delta which equals transpose([ A23 A31 A12])

Construct the symmetric 4x4 matrix Q which equals

$$\begin{bmatrix} trace \, (C) & transpose(Delta) \\ Delta & C + transpose(C) - trace(C) * id(3) \end{bmatrix}$$

Where trace equals the product of the diagonal elements and id(3) is the 3x3 identity matrix.
Determine the unit eigenvector q = [q0 q1 q2 q3] which corresponds to the largest positive eigenvalue of Q

$$R = \begin{bmatrix} q0^2 + q1^2 - q2^2 - q3^2 & 2(q1q2-q0q3) & 2(q1q3+q0q2) \\ 2(q1q2+q0q3) & q0^2+q2^2-q1^2-q3^2 & 2(q2q3-q0q1) \\ 2(q1q3-q0q2) & 2(q2q3-q0q1) & q0^2+q3^2-q1^2-q2^2 \end{bmatrix}$$

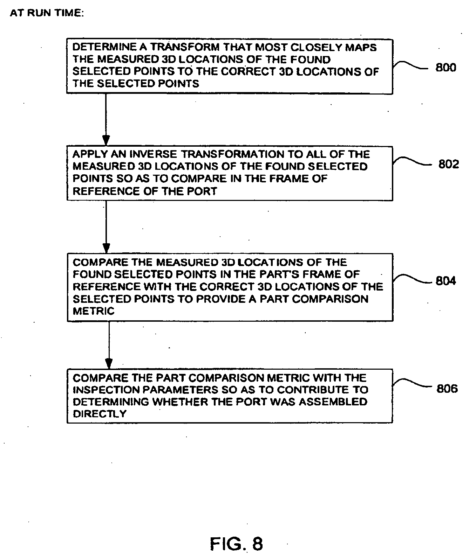

The following discussion explains why we compute the pose from fewer than all of the available pairs of corresponding 3D points.
Thus, with reference to Fig. 8, when the part includes at least three subcomponents, the method at run time further can include: determining a transformation that most closely maps the measured 3D locations of the found selected points to the correct 3D locations of the selected points 800; applying an inverse of the transformation to all of the measured 3D locations of the found selected points so as to compare in the frame of reference of the part 802; comparing the measured 3D locations of the found selected points in the part's frame of reference with the correct 3D locations of the selected points to provide a part comparison metric 804; and comparing the part comparison metric with the inspection parameters so as to contribute to determining whether the part was assembled correctly 806.
In some embodiments, comparing can include comparing a single component of the mapped measured 3D locations of the found selected points in the part's frame of reference with a respective single component of the correct 3D locations of the selected points to provide a single component part comparison metric. Also, determining whether the part was assembled correctly can include determining whether the single component comparison metric exceeds a single component acceptance threshold, and thereby at least partially determining whether the part has been assembled correctly.

Alternatively, instead of comparing the metric to a fixed user-defined threshold, statistics of measurements can be compiled, and new measurements can be compared to a data-derived tolerance. For example, a measurement that deviated from a data-derived tolerance by more than 6 sigma would not be acceptable. Other metrics may occur to one skilled in the art, and are within the scope of the invention.

If all of the subcomponents (and therefore, all of the 3D runtime measured points) are in their correct positions, then the overall pose estimate will be correct, and the individual discrepancies will be relatively small.

However, if one or more of the subcomponents are out of their correct positions, then the overall pose estimate may or may not be correct. If the overall pose estimate is correct, then all of the correctly positioned subcomponents will have small discrepancies, but the incorrectly positioned subcomponents will have large discrepancies

If the subcomponent is incorrectly positioned, then the discrepancy should represent that incorrect positioning. Consequently, there should be a discrepancy (albeit if the positioning is not large, then the discrepancy may not be large). But if the overall pose is correct, then the positional discrepancy will definitely represent that incorrect positioning.

But if one of the subcomponents is out of position AND if the overall pose estimate is incorrect, then the correctly positioned subcomponents have large discrepancies and/or the incorrectly positioned subcomponents have small discrepancies.

If the pose estimate is incorrect, then the correctly positioned subcomponents MAY have large discrepancies and/or the incorrectly positioned subcomponents MAY have small discrepancies.

In particular, there is one situation which is worrisome - the case where all of the subcomponents induce small discrepancies, even though one of the subcomponents is out of position. Unfortunately, this case can occur if the overall pose estimate is computed so as to accommodate the incorrectly positioned subcomponent.

So, in an illustrative embodiment, we take additional measures so as to guard against this situation. These measures involve computing the pose estimate by intentionally ignoring the subcomponent that we are intending to measure. In this way, we guard against the pose estimate accommodating a particular incorrect position by computing the pose estimate without using this position. This practice is commonly referred to as "cross-validation" - estimating a parameter from a subset of the data, and then verifying that estimate with the remainder of the data. Note that ignoring a particular data point does not guarantee that the undesirable situation cannot happen, it just significantly reduces the probability of this situation so that it becomes less worrisome.

In this case, we can use three or more pairs of corresponding 3D points (a pair is a 3D model point and a corresponding 3D runtime measured position) (since at least three pairs are needed to determine a 6 DOF pose). One way is to compute the object's pose estimate from all three element subsets of pairs of corresponding data, and then compute the discrepancies - keeping the largest discrepancy for each pair of corresponding 3D points. Alternatively, we can choose to use all but the selected pair of 3D points when measuring the discrepancy for each selected pair of 3D points.

We should point out that there may be cases where a particular subset of points cannot accurately constrain the pose estimate. This could happen because the subset of points are collinear or almost collinear, or because the points are relatively close together. In either case, we could ignore that particular pose estimate (for the purposes of computing discrepancies) and use another pose estimate (or, if necessary, include the pair of 3D points that we are trying to measure)

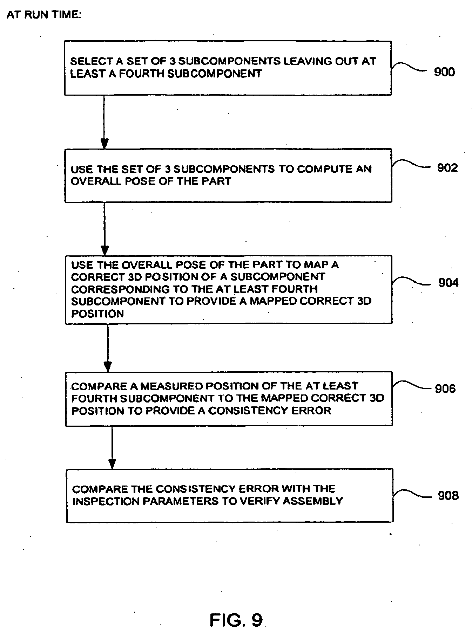

Thus, with reference to Fig. 9, when the part includes at least four subcomponents, the method at run time further includes: selecting a set of three subcomponents, leaving out at least a fourth subcomponent 9,00; using the set of three subcomponents to compute an overall pose of the part 902; using the overall pose of the part to map a correct 3D position of a subcomponent corresponding to the at least fourth subcomponent to provide a mapped correct 3D position 904; comparing a measured position of the at least fourth subcomponent to the mapped correct 3D position to provide a consistency error 906; and comparing the consistency error with the inspection parameters so as to contribute to determining whether the part was assembled correctly 908.

When a plurality of sets of at least two subcomponent positions are selected, thereby providing a plurality of consistency errors, the method further includes comparing each consistency error with the inspection parameters so as to contribute to determining whether the part was assembled correctly. Sometimes, a plurality of sets of at least three subcomponent positions are selected.

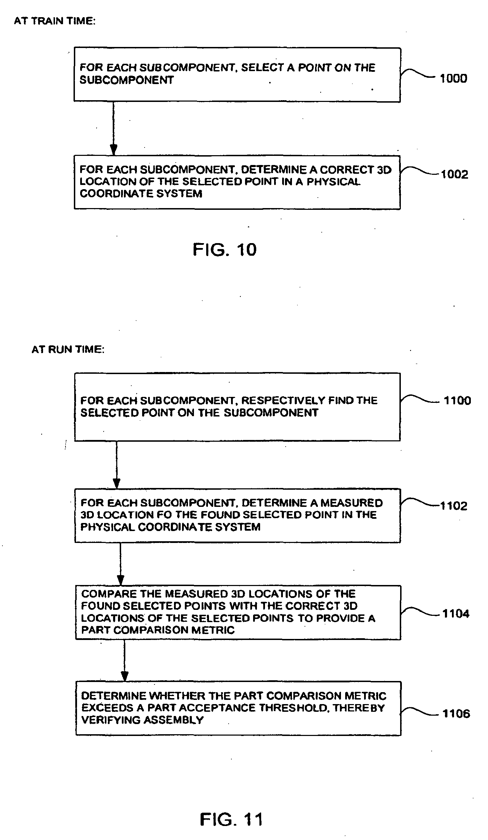

With reference to Fig. 10, the invention, more generally, is a method for verifying correct assembly of a part having at least two subcomponents, wherein the method includes at train time: for each subcomponent, selecting a point on the subcomponent 1000; and for each subcomponent, determining a correct 3D location of the selected point in a physical coordinate system 1002. As discussed above, it's advantageous to handle more than two subcomponents.

With reference to Fig. 11, at run time, the method includes: for each subcomponent, respectively finding the selected point on the subcomponent 1100; for each subcomponent, determining a measured 3D location of the found selected point in the physical coordinate system 1102; comparing the measured 3D locations of the found selected points with the correct 3D locations of the selected points to provide a part comparison metric 1104; and determining whether the part comparison metric exceeds a part acceptance threshold, and thereby determining whether the part has been assembled correctly 1106.

In illustrative embodiments, comparing 1104 includes comparing a single component of the measured 3D locations of the found selected points with a respective single component of the correct 3D locations of the selected points to provide a single component part comparison metric; and wherein determining 1106 includes determining whether the single component comparison metric exceeds a single component acceptance threshold, and thereby at least partially determining whether the part has been assembled correctly.

In further illustrative embodiments, comparing a single component includes: comparing separately a component in each of the x, y, and z dimensions of the measured 3D locations of the found selected points with a respective single component in each of the x, y, and z dimensions of the correct 3D locations of the selected points to provide a component part comparison metric in each of the x, y, and z dimensions. In this case, "determining whether the part comparison metric exceeds a part acceptance threshold" includes determining whether each of an x, y, and z component comparison metric exceeds a corresponding x, y, and z component acceptance threshold, and thereby at least partially determining whether the part has been assembled correctly. The user can select the component tolerance thresholds in each of the x, y, and z dimensions.

The comparing step 1104 can also include, for each subcomponent, comparing the measured 3D location of the found selected point with the correct 3D location of the selected point to provide a 3D location error; and combining each of the 3D location errors to provide a part comparison metric.

Also, the comparing step 1104 can include determining a transformation that most closely maps the measured 3D locations of the found selected points to the correct 3D locations of the selected points; computing an RMS error among the mapped measured 3D locations and the correct 3D locations; and providing the RMS error as at least part of the part comparison metric.

The comparing step 1104 can include, at run time, determining a transformation that most closely maps the measured 3D locations of the found selected points to the correct 3D locations of the selected points, and then applying an inverse of the transformation to all of the measured 3D locations of the found selected points so as to compare in the frame of reference of the part. Then, at train time, the comparing step 1104 including comparing the measured 3D locations of the found selected points in the part's frame of reference with the correct 3D locations of the selected points to provide a part comparison metric.

The comparing step 1104 can include comparing a single component of the mapped measured 3D locations of the found selected points in the part's frame of reference with a respective single component of the correct 3D locations of the selected points to provide a single component part comparison metric. Accordingly, the determining step 1106 can include determining whether the single component comparison metric exceeds a single component acceptance threshold, and thereby at least partially determining whether the part has been assembled correctly.

The comparing step 1104 can also include computing an RMS error among the mapped measured 3D locations of the found selected points in the part's frame of reference and the correct 3D locations; and providing the RMS error as at least part of the part comparison metric.

In other embodiments, the comparing step 1104 can include: selecting three measured 3D locations of the found selected points; determining a transformation that most closely maps the corresponding three correct 3D locations of the selected points to the three measured 3D locations of the found selected points; using the transformation to map a fourth 3D location from a correct 3D location of the selected points to a predicted measured 3D location of the found selected points; and comparing the predicted measured 3D location of the found selected points to an actual measured 3D location of the found selected points so as to provide a consistency-check 3D location error.

The step 1104 of comparing can also include: selecting three measured 3D locations of the found selected points; determining a transformation that most closely maps the corresponding three correct 3D locations of the selected points to the three measured 3D locations of the found selected points; using the transformation to map a fourth 3D location from a correct 3D location of the selected points to a predicted measured 3D location of the found selected points; comparing a single component of the predicted measured 3D location of the found selected points to a single component of an actual measured 3D location of the found selected points so as to provide at least a contribution to a part comparison metric.

This procedure can be repeated for a plurality of different sets of three measured 3D locations of the found selected points, thereby providing a plurality of consistency-check 3D location errors. Then, the method includes computing a total consistency-check 3D location error; and providing the total consistency-check 3D location error as at least part of the part comparison metric.

Note that, at run time, for each subcomponent, selecting a point on the subcomponent can be done manually by an operator, as shown in Fig. 2, for example.

Also, at run time, for each subcomponent, the operator selects a point on the subcomponent that can be seen in each of a plurality of training windows, each training window showing a portion of a field of view of one of three respective calibrated cameras. In illustrative embodiments, there are at least three training windows. Again, see Fig. 2.

For each subcomponent, it is illustrative that the operator selects the point in each of the plurality of training windows by clicking on the point in each training window so as to minimize an error function.

Also, for each subcomponent, a 2D search model is trained to find the subcomponent in each of the plurality of training windows, the selected point serving as an origin of the 2D search model, as shown in Fig. 2.

The 2D search model is based on one of: normalized correlation search, rotation-invariant and scale-invariant search, and PatMax search.

With reference to Fig. 10, at train time, for each subcomponent, selecting a point on the subcomponent 1000 includes: selecting a point at the center of a fiducial on a surface of a substrate supporting a plurality of other subcomponents. A fiducial on the surface of a substrate can be considered a subcomponent. Use of a substrate is not necessary to practice the invention.

With reference to Fig. 10, at train time, for each subcomponent, determining a correct 3D location of the selected point in a physical coordinate system 1002 is achieved using triangulation. One result of the triangulation is a triangulation RMS error. The triangulation RMS error can be compared with a tolerance threshold, herein called the Triangulation RMS Error Tolerance 404, as shown in Fig. 4. The Triangulation RMS Error Tolerance 404 can be used at training time by the operator so as to provide feedback on how consistently the operator has placed the cross-hair upon the same point on a subassembly in each of the three fields of view of the respective cameras. If the Triangulation RMS Error exceeds the Tolerance 404, then the cross-hair can be placed again in an effort to reduce the Triangulation RMS Error until it's below the Tolerance 404. Alternatively, the application could have a separate Training Time Triangulation RMS Error Tolerance which is used to determine whether the operator must reselect the points.

If one were to practice the invention in the case of two subcomponents, the method of the invention includes, at train time, selecting a point on each of two subcomponents 1000; for both subcomponents, determining a correct 3D location of the selected point in a physical coordinate system 1002. At run time, one embodiment of the method of the invention includes, for both subcomponents, respectively finding the selected point on the subcomponent 1100; for both subcomponents, determining a measured 3D location of the found selected point in the physical coordinate system 1102; comparing the measured 3D locations of the found selected points with the correct 3D locations of the selected points to provide a part comparison metric 1104; and determining whether the part comparison metric exceeds a part acceptance threshold, and thereby determining whether the part has been assembled correctly 1106.

In illustrative embodiments, comparing 1104 includes: for both subcomponents, comparing the measured 3D location of the found selected point with the correct 3D location of the selected point to provide a 3D location error; and combining both of the 3D location errors to provide a part comparison metric.

With reference again to Fig. 11, to employ a subcomponent pair span verification metric, the method includes, at train time: selecting a point on each of two subcomponents 1000, at least one of the two points being different from previously selected pairs of points;

for both subcomponents, determining a correct 3D location of the selected point in a physical coordinate system 1002. Then, at run time, for both subcomponents, respectively finding the selected point on the subcomponent 1100; for both subcomponents, determining a measured 3D location of the found selected point in the physical coordinate system 1102; comparing the measured 3D locations of the found selected points with the correct 3D locations of the selected points to provide a subcomponent pair span verification metric (which is defined as the distance between the two found selected points) 1104; combining the subcomponent pair span verification metric with at least a second subcomponent pair span verification metric to provide an accumulated subcomponent pair span verification metric; and determining at run time whether the accumulated subcomponent pair span verification metric exceeds a part acceptance threshold, and thereby determining whether the part has been assembled correctly 1106.

This method can be repeated for a plurality of pairs of measured 3D locations of the found selected points, thereby providing a plurality of subcomponent pair span verification metrics. Then, the method also includes: computing a total subcomponent pair span verification metric; and providing the total subcomponent pair span verification metric as at least a portion of a part comparison metric.

An illustrative embodiment uses at least four subcomponents, but one can use as many as one needs to perform the assembly verification. The illustrative embodiment also measures each subcomponent once.

Other modifications and implementations will occur to those skilled in the art without departing from the spirit and the scope of the invention as claimed. Accordingly, the above description is not intended to limit the invention except as indicated in the following claims.

**Claims**

1. A method for verification of correct assembly of a part, the part having a plurality of subcomponents, the method comprising:

at train time,

positioning at least two cameras such that a field of view of at least one of the cameras includes at least one subcomponent of the part; calibrating each of the at least two cameras at least so as to relate image coordinates to physical coordinates;

for each of at least two subcomponents, using each of the at least two cameras, acquiring an image of a subcomponent in a correctly assembled position;

for each of the at least two subcomponents, computing an expected 3D position of the subcomponent by triangulation;

**characterized by**

conducting at train time the following steps; for each of at least two subcomponents, using each of the at least two cameras, selecting a training window that includes the subcomponent, and selecting the same point on the subcomponent in each training window, the same point serving as an origin associated with the subcomponent;

for each of at least two subcomponents, using the training window and the origin corresponding thereto, creating a 2D search model of the subcomponent in the training window;

selecting inspection parameters;

conducting at run time the following steps;

for each of at least two subcomponents of an assembled part to be verified, using each of the at least two cameras, acquiring an image of a subcomponent in a candidate assembled position;

for each of the at least two subcomponents, finding the image of the subcomponent in the candidate assembled position using the 2D search model of the subcomponent so as to provide a measured 2D position of the origin of the subcomponent;

for each of the at least two subcomponents, computing a measured 3D position of the subcomponent by triangulation;

for each of the at least two subcomponents, computing a difference in 3D position between the measured 3D position of the subcomponent and a respective correct 3D position of the subcomponent; and comparing the difference in 3D position with the inspection parameters so as to contribute to determining whether the part was assembled correctly.

2. The method of claim 1, wherein comparing includes:

   comparing a single component of the difference in 3D position with single component inspection parameters so as to contribute to determining whether the part was assembled correctly.

3. The method of claim 1, wherein at train time, selecting inspection parameters includes:

   selecting distance tolerances defining an extent to which a measured 3D position can acceptably differ from a correct 3D position.

4. The method of claim 1, wherein at train time, creating a 2D search model of the subcomponent in the training window includes: creating a rotation-invariant and scale invariant search model.

5. The method of claim 1, wherein computing a difference in 3D position between the measured 3D position of the subcomponent and the respective correct 3D position of the subcomponent includes: computing a difference in height between the measured 3D position and the respective correct 3D position.

6. The method of claim 1, at run time, further comprising:

   computing an overall pose of the part using a plurality of 3D positions of respective subcomponents.

7. The method of claim 6, wherein computing an overall pose of the part includes:

   computing an overall pose error; and
   finding a pose which minimizes the overall pose error.

8. The method of claim 7, further including:

   comparing the overall pose error with the inspection parameters so as to contribute to determining whether the part was assembled correctly.

9. The method of claim 1, wherein the part includes at least four subcomponents, the method at run time further including:

selecting a set of three subcomponents, leaving out at least a fourth subcomponent;
using the set of three subcomponents to compute an overall pose of the part;
using the overall pose of the part to map a correct 3D position of a subcomponent corresponding to the at least fourth subcomponent to provide a mapped correct 3D position;
comparing a measured position of the at least fourth subcomponent to the mapped correct 3D position to provide a consistency error; and
comparing the consistency error with the inspection parameters so as to contribute to determining whether the part was assembled correctly.

10. The method of claim 1, wherein the part includes at least three subcomponents, the method at run time further including:

determining a transformation that most closely maps the measured 3D locations of the found selected points to the correct 3D locations of the selected points;
apply an inverse of the transformation to all of the measured 3D locations of the found selected points so as to compare in the frame of reference of the part;
comparing the measured 3D locations of the found selected points in the part's frame of reference with the correct 3D locations of the selected points to provide a part comparison metric; and
comparing the part comparison metric with the inspection parameters so as to contribute to determining whether the part was assembled correctly.

11. The method of claim 10, wherein comparing includes:

comparing a single component of the mapped measured 3D locations of the found selected points in the part's frame of reference with a respective single component of the correct 3D locations of the selected points to provide a single component part comparison metric;
and wherein determining whether the part was assembled correctly includes:

determining whether the single component comparison metric exceeds a single component acceptance threshold, and thereby at least partially determining whether the part has been assembled correctly.

**Patentansprüche**

1. Verfahren zum Verifizieren einer korrekten Montage eines Teils, das eine Vielzahl an Teilkomponenten aufweist, wobei das Verfahren Folgendes umfasst:

zur Vorlaufzeit
Positionieren von mindestens zwei Kameras, derart, dass ein Sichtfeld mindestens einer der Kameras mindestens eine Teilkomponente des Teils umfasst;
Kalibrieren jeder der mindestens zwei Kameras zumindest zum Verknüpfen von Bildkoordinaten mit physischen Koordinaten;
Erfassen eines Bilds einer Teilkomponente in einer korrekt montierten Position für jede von mindestens zwei Teilkomponenten mittels jeder der mindestens zwei Kameras;
Berechnen einer erwarteten 3D-Position der Teilkomponente durch Triangulation für jede der mindestens zwei Teilkomponenten;
**gekennzeichnet durch**
das Ausführen der folgenden Schritte zur Vorlaufzeit:

Wählen eines die Teilkomponente umfassenden Vorlauffensters für jede von mindestens zwei Teilkomponenten mittels jeder der mindestens zwei Kameras und Wählen desselben Punkts auf der Teilkomponente in jedem Vorlauffenster, wobei derselbe Punkt als ein der Teilkomponente zugeordneter Ausgangspunkt dient;
Erstellen eines 2D-Suchmodells der Teilkomponente in dem Vorlauffenster für jede von mindestens zwei Teilkomponenten mittels des Vorlauffensters und des entsprechenden Ausgangspunkts;
Wählen von Prüfparametern;

das Ausführen der folgenden Schritte zur Laufzeit:

Erfassen eines Bilds einer Teilkomponente in einer montierten Kandidatenposition für jede von mindestens zwei Teilkomponenten eines zu verifizierenden montierten Teils mittels jeder der mindestens zwei Kameras;

Finden des Bilds der Teilkomponente in der montierten Kandidatenposition für jede der mindestens zwei Teilkomponenten mittels des 2D-Suchmodels der Teilkomponente, sodass eine gemessene 2D-Position des Ausgangspunkts der Teilkomponente bereitgestellt wird;

Berechnen einer gemessenen 3D-Position der Teilkomponente **durch** Triangulation für jede der mindestens zwei Teilkomponenten;

Berechnen eines 3D-Positionsunterschieds zwischen der gemessenen 3D-Position der Teilkomponente und einer jeweiligen korrekten 3D-Position der Teilkomponente für jede der mindestens zwei Teilkomponenten; und

Vergleichen des 3D-Positionsunterschieds mit den Prüfparametern, um zum Ermitteln beizutragen, ob das Teil korrekt montiert wurde.

2. Verfahren nach Anspruch 1, wobei das Vergleichen Folgendes umfasst:

Vergleichen einer einzelnen Komponente des 3D-Positionsunterschieds mit Einzelkomponentenprüfparametern, um zum Ermitteln beizutragen, ob das Teil korrekt montiert wurde.

3. Verfahren nach Anspruch 1, wobei das Wählen der Prüfparameter zur Vorlaufzeit Folgendes umfasst:

Wählen von Abstandstoleranzen, die das Ausmaß einer noch akzeptablen Abweichung einer gemessenen 3D-Position von einer korrekten 3D-Position bestimmen.

4. Verfahren nach Anspruch 1, wobei das Erstellen eines 2D-Suchmodells der Teilkomponente in dem Vorlauffenster zur Vorlaufzeit Folgendes umfasst: Erstellen eines rotationsinvarianten und maßstabsinvarianten Suchmodels.

5. Verfahren nach Anspruch 1, wobei das Berechnen eines 3D-Positionsunterschieds zwischen der gemessenen 3D-Position der Teilkomponente und der jeweiligen korrekten 3D-Position der Teilkomponente Folgendes umfasst:

Berechnen eines Höhenunterschieds zwischen der gemessenen 3D-Position und der jeweiligen korrekten 3D-Position.

6. Verfahren nach Anspruch 1, zur Laufzeit weiterhin umfassend:

Berechnen einer Gesamtstellung des Teils mittels einer Vielzahl von 3D-Positionen entsprechender Teilkomponenten.

7. Verfahren nach Anspruch 6, wobei das Berechnen einer Gesamtstellung des Teils Folgendes umfasst:

Berechnen eines Gesamtstellungsfehlers; und
Finden einer Stellung, die den Gesamtstellungsfehler minimiert.

8. Verfahren nach Anspruch 7, weiterhin umfassend:

Vergleichen des Gesamtstellungsfehlers mit den Prüfparametern, um zum Ermitteln beizutragen, ob das Teil korrekt montiert wurde.

9. Verfahren nach Anspruch 1, wobei das Teil mindestens vier Teilkomponenten umfasst, wobei das Verfahren zur Laufzeit weiterhin Folgendes umfasst:

Wählen einer Gruppe von drei Teilkomponenten, wobei mindestens eine vierte Teilkomponente ausgelassen wird;
Verwenden der Gruppe von drei Teilkomponenten zum Berechnen einer Gesamtstellung des Teils;
Verwenden der Gesamtstellung des Teils zum Abbilden einer korrekten 3D-Position einer der mindestens vierten Teilkomponente entsprechenden Teilkomponente, um eine abgebildete korrekte 3D-Position bereitzustellen;

Vergleichen einer gemessenen Position der mindestens vierten Teilkomponente mit der abgebildeten korrekten 3D-Position zum Bereitstellen eines Konsistenzfehlers; und

Vergleichen des Konsistenzfehlers mit den Prüfparametern, um zum Ermitteln beizutragen, ob das Teil korrekt montiert wurde.

10. Verfahren nach Anspruch 1, wobei das Teil mindestens drei Teilkomponenten umfasst, wobei das Verfahren zur Laufzeit weiterhin Folgendes umfasst:

Ermitteln einer Transformation, welche die gemessenen 3D-Orte der gefundenen gewählten Punkte am genauesten auf die korrekten 3D-Orte der gewählten Punkte abbildet;

Anwenden einer Umkehrfunktion der Transformation auf alle gemessenen 3D-Orte der gefundenen gewählten Punkte zum Vergleichen in dem Bezugsrahmen des Teils;

Vergleichen der gemessenen 3D-Orte der gefundenen gewählten Punkte im Bezugsrahmen des Teils mit den korrekten 3D-Orten der gewählten Punkte zum Bereitstellen einer Teilvergleichsmetrik; und

Vergleichen der Teilvergleichsmetrik mit den Prüfparametern, um zum Ermitteln beizutragen, ob das Teil korrekt montiert wurde.

11. Verfahren nach Anspruch 10, wobei das Vergleichen Folgendes umfasst:

Vergleichen einer einzelnen Komponente der abgebildeten gemessenen 3D-Orte der gefundenen gewählten Punkte in dem Bezugsrahmen des Teils mit einer entsprechenden einzelnen Komponente der korrekten 3D-Orte der gewählten Punkte zum Bereitstellen einer Einzelkomponententeilvergleichsmetrik;

und wobei das Ermitteln, ob das Teil korrekt montiert wurde, Folgendes umfasst:

Ermitteln, ob die Einzelkomponentenvergleichsmetrik eine Akzeptanzschwelle einer einzelnen Komponente übersteigt, und somit zumindest teilweises Ermitteln, ob das Teil korrekt montiert wurde.

## Revendications

1. Procédé pour la vérification d'un assemblage correct d'une part, la part ayant une pluralité de sous-composants, ledit procédé comprenant :

au temps d'etude,

positionner au moins deux cameras de telle manière qu'un champ de vision d'au moins une des cameras comprend au moins un sous-composant de la part ;

calibrer chacune des au moins deux cameras au moins afin de relier des coordonnées d'image à des coordonnées physiques ;

pour chacun d'au moins deux sous-composants, utilisant chacune des au moins deux cameras, acquérir une image d'un sous-composant dans une position assemblée correctement;

pour chacun des au moins deux sous-composants, calculer une position en 3D attendue du sous-composant par triangulation;

**caractérisé en ce qu'**

au temps d'etude les étapes suivantes sont exécutées:

pour chacun d'au moins deux sous-composants, utilisant chacune des au moins deux cameras, sélecter une fenêtre d'etude qui comprend le sous-composant et sélecter le même point sur le sous-composant dans chaque fenêtre d'etude, le même point servant comme une origine associée avec le sous-composant ;

pour chacun d'au moins deux sous-composants, utilisant la fenêtre d'etude et l'origine correspondant à celle-ci, créer un modèle de recherche en 2D du sous-composant dans la fenêtre d'etude ;

sélecter des paramètres d'inspection;

au temps de fonctionnement les étapes suivantes sont exécutées :

pour chacun d'au moins deux sous-composants d'une part assemblée à être vérifiée, utilisant chacune des au moins deux cameras, acquérir une image d'un sous-composant dans une position assemblée candidate ;

pour chacun des au moins deux sous-composants, trouver l'image du sous-composant dans la position assemblée candidate utilisant le modèle de recherche en 2D du sous-composant afin de prévoir une position en 2D mesurée de l'origine du sous-composant ;

pour chacun des au moins deux sous-composants, calculer une position en 3D mesurée du sous-composant par triangulation ;

pour chacun des au moins deux sous-composants, calculer une différence de position en 3D entre la position en 3D mesurée du sous-composant et une position en 3D correcte respective du sous-composant ; et

comparer la différence de position en 3D avec les paramètres d'inspection afin de contribuer à déterminer si la part a été assemblée correctement.

2. Procédé selon la revendication 1, dans lequel la comparaison comprend :

comparer un composant individuel de la différence de position en 3D avec des paramètres d'inspection de composant individuel afin de contribuer à déterminer si la part a été assemblée correctement.

3. Procédé selon la revendication 1, dans lequel au temps d'etude, la sélection des paramètres d'inspection comprend :

sélecter des tolérances de distance qui définissent une étendue à laquelle une position en 3D mesurée peut différer suffisamment d'une position en 3D correcte.

4. Procédé selon la revendication 1, dans lequel au temps d'etude, la création d'un modèle de recherche en 2D du sous-composant dans la fenêtre d'etude comprend: créer un modèle de recherche invariant par rotation et invariant d'échelle.

5. Procédé selon la revendication 1, dans lequel le calcul d'une différence de position en 3D entre la position en 3D mesurée du sous-composant et la position en 3D correcte respective du sous-composant comprend :

calculer une différence de hauteur entre la position en 3D mesurée et la position en 3D correcte respective.

6. Procédé selon la revendication 1, au temps de fonctionnement, comprenant en outre:

calculer une pose générale de la part utilisant une pluralité de positions en 3D des sous-composants respectifs.

7. Procédé selon la revendication 6, dans lequel le calcul d'une pose générale de la part comprend :

calculer une erreur de pose générale ; et
trouver une pose qui minimise l'erreur de pose générale.

8. Procédé selon la revendication 7, comprenant en outre:

comparer l'erreur de pose générale avec les paramètres d'inspection afin de contribuer à déterminer si la part a été assemblée correctement.

9. Procédé selon la revendication 1, dans lequel la part comprend au moins quatre sous-composants, ledit procédé au temps de fonctionnement comprenant en outre:

sélecter un groupe de trois sous-composants, omettant au moins un quatrième sous-composant;
utiliser le groupe de trois sous-composants pour calculer une pose générale de la part;
utiliser la pose générale de la part pour cartographier une position en 3D correcte d'un sous-composant correspondant à l'au moins quatrième sous-composant pour prévoir une position en 3D correcte cartographiée ;
comparer une position mesurée de l'au moins quatrième sous-composant à la position en 3D correcte cartographiée pour prévoir une erreur de consistance ; et
comparer l'erreur de consistance aux paramètres d'inspection afin de contribuer à déterminer si la part a été assemblé correctement.

10. Procédé selon la revendication 1, dans lequel la part comprend au moins trois sous-composants, ledit procédé au temps de fonctionnement comprenant en outre :

déterminer une transformation qui cartographe le plus exactement les lieus en 3D mesurés des points sélectés trouvés aux lieus en 3D corrects des points sélectés ;

appliquer une inversion de la transformation à tous les lieus en 3D mesurés des points sélectés trouvés afin de comparer dans le cadre de référence de la part;

comparer les lieus en 3D mesurés des points sélectés trouvés dans le cadre de référence de la part aux lieus en 3D corrects des points sélectés pour prévoir une métrique de comparaison de part ; et

comparer la métrique de comparaison de part aux paramètres d'inspection afin de contribuer à déterminer si la part a été assemblée correctement.

**11.** Procédé selon la revendication 10, dans lequel la comparaison comprend:

comparer un composant individuel des lieus en 3D mesurés cartographiés des points sélectés trouvés dans le cadre de référence de la part à un composant individuel respectif des lieus en 3D des points sélectés pour prévoir une métrique de comparaison de part de composant individuel ;

et dans lequel la détermination si une part a été assemblée correctement comprend:

déterminer si la métrique de comparaison de composant individuel dépasse un seuil d'acceptation de composant individuel et donc déterminer au moins partiellement si la part a été assemblée correctement.

FIG. 1

FIG. 2

FIG. 3

FIG. 4

FIG. 5

AT TRAIN TIME:

POSITION THREE CAMERAS SO EACH SEES AT LEAST THREE SUBCOMPONENTS — 600

CALIBRATE THE CAMERAS TO RELATE IMAGE COORDINATES TO PHYSICAL COORDINATES — 602

WITH THE THREE SUBCOMPONENTS CORRECTLY PLACED ACQUIRE AN IMAGE WITH THE THREE CAMERAS SIMULTANEOUSLY OF THE THREE SUBCOMPONENTS — 604

FOR EACH SUBCOMPONENT, SELECT A TRAINING WINDOW THAT INCLUDES THE SUBCOMPONENT IN EACH IMAGE, AND SELECT A POINT ON THE SUB COMPONENT THAT IS IS WITHIN EACH TRAINING WINDOW — 606

USING THE POINT SELECTED IN EACH TRAINING WINDOW TO COMPUTE AN EXPECTED 3D POSITION USING TRIANGULATION — 608

USING EACH TRAINING WINDOW AND THE SELECTED POINT, CREATE A 2D SEARCH MODEL OF THE SUBCOMPONENT IN THE TRAINING WINDOW — 610

SELECT INSPECTION PARAMETERS — 612

FIG. 6

23

AT RUN TIME:

USING THE THREE CAMERAS CALIBRATED AT TRAIN TIME, SIMULTANEOUSLY ACQUIRED AN IMAGE OF EACH OF THE THREE SUBCOMPONENTS — 700

FIND THE IMAGE OF EACH SUBCOMPONENTS IN EACH TRAINING WINDOW USING THE RESPECTIVE 2D SEARCH MODEL SO AS TO PROVIDE A MEASURED 2D POSITION OF THE SELECTED POINT ON THE SUBCOMPONENT — 702

COMPUTER A MEASURED 2D POSITION OF EACH OF THE SUBCOMPONENTS USING THE 2D POSITIONS, VIS TRIANGULATION — 704

COMPUTES A DIFFERENCE IN 3D POSITION BETWEEN THE MEASURED 3D POSITION AND A RESPECTIVE CORRECT EXPECTED 3D POSITION OF EACH SUBCOMPONENT — 706

COMPARE THE DIFFERENCE IN 3D POSITION WITH THE SELECTED INSPECTION PARAMETERS TO DETERMINE WHETHER THE PORT WAS CORRECTLY ASSEMBLED — 708

FIG. 7

AT RUN TIME:

DETERMINE A TRANSFORM THAT MOST CLOSELY MAPS THE MEASURED 3D LOCATIONS OF THE FOUND SELECTED POINTS TO THE CORRECT 3D LOCATIONS OF THE SELECTED POINTS — 800

APPLY AN INVERSE TRANSFORMATION TO ALL OF THE MEASURED 3D LOCATIONS OF THE FOUND SELECTED POINTS SO AS TO COMPARE IN THE FRAME OF REFERENCE OF THE PORT — 802

COMPARE THE MEASURED 3D LOCATIONS OF THE FOUND SELECTED POINTS IN THE PART'S FRAME OF REFERENCE WITH THE CORRECT 3D LOCATIONS OF THE SELECTED POINTS TO PROVIDE A PART COMPARISON METRIC — 804

COMPARE THE PART COMPARISON METRIC WITH THE INSPECTION PARAMETERS SO AS TO CONTRIBUTE TO DETERMINING WHETHER THE PORT WAS ASSEMBLED DIRECTLY — 806

FIG. 8

AT RUN TIME:

SELECT A SET OF 3 SUBCOMPONENTS LEAVING OUT AT LEAST A FOURTH SUBCOMPONENT — 900

USE THE SET OF 3 SUBCOMPONENTS TO COMPUTE AN OVERALL POSE OF THE PART — 902

USE THE OVERALL POSE OF THE PART TO MAP A CORRECT 3D POSITION OF A SUBCOMPONENT CORRESPONDING TO THE AT LEAST FOURTH SUBCOMPONENT TO PROVIDE A MAPPED CORRECT 3D POSITION — 904

COMPARE A MEASURED POSITION OF THE AT LEAST FOURTH SUBCOMPONENT TO THE MAPPED CORRECT 3D POSITION TO PROVIDE A CONSISTENCY ERROR — 906

COMPARE THE CONSISTENCY ERROR WITH THE INSPECTION PARAMETERS TO VERIFY ASSEMBLY — 908

FIG. 9

AT TRAIN TIME:

FOR EACH SUBCOMPONENT, SELECT A POINT ON THE SUBCOMPONENT ⟿ 1000

FOR EACH SUBCOMPONENT, DETERMINE A CORRECT 3D LOCATION OF THE SELECTED POINT IN A PHYSICAL COORDINATE SYSTEM ⟿ 1002

## FIG. 10

AT RUN TIME:

FOR EACH SUBCOMPONENT, RESPECTIVELY FIND THE SELECTED POINT ON THE SUBCOMPONENT ⟿ 1100

FOR EACH SUBCOMPONENT, DETERMINE A MEASURED 3D LOCATION FO THE FOUND SELECTED POINT IN THE PHYSICAL COORDINATE SYSTEM ⟿ 1102

COMPARE THE MEASURED 3D LOCATIONS OF THE FOUND SELECTED POINTS WITH THE CORRECT 3D LOCATIONS OF THE SELECTED POINTS TO PROVIDE A PART COMPARISON METRIC ⟿ 1104

DETERMINE WHETHER THE PART COMPARISON METRIC EXCEEDS A PART ACCEPTANCE THRESHOLD, THEREBY VERIFYING ASSEMBLY ⟿ 1106

## FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 11246024 A, Aaron Wallack and David Michael

### Non-patent literature cited in the description

- A Multiscale Assembly Inspection Algorithm. *IEEE Robotics & Automation Magazine,* June 1996
- **J. GÜHRING.** Reliable 3D Surface Acquisition, Registration and Validation using Statistical Error Models. *3D digital imaging and modelling proceedings,* 2001

- **QIFENG YU.** Accurate Measurement of 3D Coordinate of an Object with Subpixel Technique. *Systems,* 1996